Europäisches Patentamt

(19) European Patent Office

Office européen des brevets

(11) Publication number: **0 122 685**

**A1**

# (12) EUROPEAN PATENT APPLICATION

(21) Application number: **84300319.5**

(22) Date of filing: **19.01.84**

(51) Int. Cl.³: **F 16 B 19/05**

(30) Priority: **18.04.83 US 486065**

(43) Date of publication of application:
**24.10.84 Bulletin 84/43**

(84) Designated Contracting States:
**DE FR GB IT**

(71) Applicant: **TEXTRON INC.**
**40 Westminster Street**
**Providence, Rhode Island 02903(US)**

(72) Inventor: **Huynh, Cu Soc**
**1114 S. Evening Star Drive**
**Anaheim California 92806(US)**

(74) Representative: **Miller, Joseph et al,**
**J. MILLER & CO. Lincoln House 296-302 High Holborn**
**London WC1V 7JH(GB)**

(54) A method of setting a lockbolt and a system for fastening workpieces together.

(57) A system and method for fastening a plurality of work-pieces (10, 11) with a lockbolt comprising a pin (1) with a head (3) and a shank having a plurality of grooves (2) and ridges and a tubular collar (5). A tool for swaging the collar onto the grooves of the pin has an annular anvil (15). The anvil (15) is forced over the collar (5) during swaging. The anvil (15) has three coincident axial sections comprising a swaging section defined by a frusto-conical surface forming an angle between 10 and 20 degrees with the axis of the anvil (15), a retaining section defined by a frusto-conical surface forming an angle between 2 and 5 degrees with the axis of the anvil (15), and a restricting section defined by a frusto-conical surface forming an angle between 17 and 23 degrees with the axis of the anvil (15). The axial length of the swaging, retaining and restricting sections of the anvil (15) are such that one end of the collar (5) entering the restricting end of the anvil (15) does not extend therebeyond when swaging has been completed resulting in a substantially flush break of the pin (1) within the restricting section.

Fig. I

Croydon Printing Company Ltd.

- 1 -

"A METHOD OF SETTING A LOCKBOLT AND A SYSTEM FOR FASTENING
WORKPIECES TOGETHER"

This invention relates to a system for fastening workpieces together comprising: a pin with a head and a shank having a plurality of grooves therein; a tubular collar; and a tool for swaging the collar into the grooves of the pin having an anvil which comprises three axial sections.

The invention also relates to a method for setting a lockbolt to join workpieces comprising a pin having a head and a shank with a plurality of grooves therein and a tubular collar comprising the steps of: positioning the collar on the pin with the workpieces between the collar and the head of the pin; and forcing a swaging anvil over the collar to swage the collar into grooves of the pin.

Lockbolts are two-part fasteners. They have as one element a headed pin with a threaded shank or a shank having a plurality of circumferential grooves. They have as a second element a collar having a central bore for sliding over the threaded or grooved shank of the pin. A special tool pulls or sets the fastener by swaging the collar into the threads or grooves. Workpieces are thereby captured between the head of the pin and the collar. Generally speaking, the setting tool grips the free end of the pin and forces a hollow anvil over the collar. Examples of prior art lockbolts and pulling tools are disclosed in U.S. Patent Specifications Nos. 2,978,946 and 4,208,943.

Early lockbolts had special breaknecks in the pin enabling the portion of the pin extending past the end of the swaged collar to be severed. With this arrangement, the thickness of the workpiece could not vary unless a pin with a differently shaped breakneck was selected. Later lockbolts made use of the swaging threads or grooves themselves, and

- 2 -

the tensile and other forces exerted by the collar as it was swaged, to sever the lockbolt near where it emerges from the collar. Thus one pin could be used with workpieces of many different thicknesses. In order to enable the severing action to occur at an acceptable tensile force (breakload) the threads or grooves were often deep and, correspondingly, their pitch (axial space between thread peaks) quite large. This, in part, resulted in a ragged and undesirable break-off of the pin near where it emerges from the collar.

In yet other approaches, to achieve the desired transverse forces at the desired break location, the collar was caused to extrude beyond the end of the anvil away from the workpiece. This resulted in an unwanted lock-up between the anvil and the collar. The lock-up required the use of a kick-out hammer in the pulling tool making it unnecessarily complex (see element 40b in Figure 16 of U.S. Patent Specification No. 2,978,946 for a kick-out hammer).

U.S.Patent Specification No. 2,978,946 discloses a system for fastening workpieces together using an anvil which comprises three constricting sections: a first frusto-conical section for swaging a collar into the threads of a pin, and a second cylindrical section that steps down in diameter to a third cylindrical section for subjecting the collar to high magnitude radial compression until increased tension in the pin produces break-off. U.S.Patent Specification No. 4,208,943 discloses a system for fastening workpieces together using an anvil which comprises a first frusto-conical surface forming an angle of 31.5 degrees with the axis of the anvil, and a second frusto-conical surface forming an angle of approximately 7 degrees with the axis of the anvil. As will become apparent from the following description, these prior art systems do not produce good engagement between the collar and the grooves of the pin and break-off of the pin tends to occur within the collar.

The present invention provides a system of the type described above characterised in that the three axial sections comprise: a swaging section defined by a frusto-conical surface forming an angle between 10 and 20 degrees with the axis of the anvil, a retaining section defined by a frusto-conical surface forming an angle between 2 and 5 degrees with the axis of the anvil and a restricting section defined by a frusto-conical surface forming an angle between 17 degrees and 23 degrees with the axis of the anvil, the axial length of the swaging, retaining and restricting sections of the anvil together being such that the distal end of the collar terminates within the restricting section when swaging has been completed.

The present invention also provides a method of the type described above characterised by the steps of: selecting a pin having grooves of a pitch less than 1/5 of the diameter (A) of the pin 1; selecting a swaging anvil having at least three sections each of which is defined by a truncated conical inner surface; forcing the anvil over the collar so that a first section of the anvil swages the collar into grooves of the pin, forcing a second section of the anvil over the portion of the collar already swaged to retain contact between the collar and the grooves of the pin; and forcing a third section of the anvil into the distal end of the collar when swaging of the remainder is complete to prevent extrusion of the collar through the back end of the anvil and to break off the distal end of the pin. As will

- 4 -

become apparent from the following description, this invention improves engagement between the collar and the grooves of the pin, and improves break-off of the pin. Thus, workpieces can be more tightly and more reliably secured together.

Preferred features of this invention will become apparent from the dependent claims of this case.

A number of properties of an assembled lockbolt are quantified by those skilled in the art. The "tensile strength" of the lockbolt joint is the tensile force (applied to the joined workpieces to pull them in opposite directions along the pin axis) at which the lockbolt will fail either by pulling away of the collar or breaking of the pin. The "single shear strength" is the shear force applied by the lockbolt (by pulling the two workpieces in opposite directions perpendicular to the pin axis) at which the pin fails.

The "residual tension" is the tension remaining in the pin after the lockbolt has been assembled. It is the resultant force compressing the two workpieces together. The residual tension significantly affects resistance to fatigue failure as will be shown. It is achieved by a swaged grip that minimizes relaxation of tension when the pulling tool is freed by break-off.

"Fatigue strength" without preloading is tested by Military Specification 13-12 Test 11. This test comprises applying a tensile load to the workpiece held loosely together by the lockbolt to vary the load between 100 and 1,000 pounds (0.44 and 4.4 KN). The results are reported as number of cycles until failure by whatever means. The preloaded fatigue strength test is very similar but lockbolts tested are held tightly together by the

- 5 -

residual tension. This is, of course, the condition of actual use. Preloaded fatigue strength is much greater than unloaded fatigue strength for any lockbolt.

Two properties relate to the performance of the lockbolt during the process of installation. "Clamp force" is the force that the lockbolt can exert to pull two spaced workpieces together. The clamp force takes place over two intervals. In the first longer interval, relative movement of the collar and pin without swaging takes place. In the second interval during swaging the extrusion of the collar out of the oncoming anvil causes a small clamp-up movement. The clamping force is the result of these two movements against the bias of the separated workpieces. The greater the clamp force the better so long as swaging eventually takes place within the capability of the pulling tool.

The second property relating to the performance of the lockbolt during installation is "breakload". It is the tensile load upon the pin that results in break-off at the end of the installation procedure. It is not related only to the inherent tensile properties of the pin, i.e. the type of steel and the effective cross-section, but also to the mechanism of breaking resulting from the anvil configuration.

The breakload must be within the capabilities of the pulling device. Higher inherent pin strength will improve tensile strength so long as the ultimate strength is controlled by the pin strength and not, for example, by the swaged joint between the pin and the collar. However, higher inherent pin strength will also increase the breakload which increases the force required to complete installation of the lockbolt. Above a certain threshold, higher breakload serves no useful function and increases strain upon the pulling machine.

The present invention will now be illustrated, merely by way of example, with reference to the accompanying drawings, in which:-

Figure 1 is a sectional view of a lockbolt and a setting tool having an anvil according to this invention during the initial phase of clamp-up;

Figure 2 is a sectional view similar to Figure 1 during initial swaging of the collar onto the lockbolt;

Figure 3 is a sectional view similar to Figure 1 just prior to break-off;

Figure 4 is a sectional view similar to Figure 1 of the set lockbolt after break-off;

Figure 5A is a detailed view of a pin according to this invention;

Figure 5B is a detail of the threads of the pin shown in Figure 5A;

Figure 6 is a detailed view of a collar according to this invention;

Figure 7 is a sectional view of an anvil according to this invention;

Figure 8 is a photograph of a series of sections through lockbolt joints formed according to this invention;

Figure 9 is a photograph of a series of sections through lockbolt joints according to advanced prior art; and

Figure 10 is a schematic drawing of the profile of a thread of a pin with truncated grooves according to a preferred embodiment of this invention.

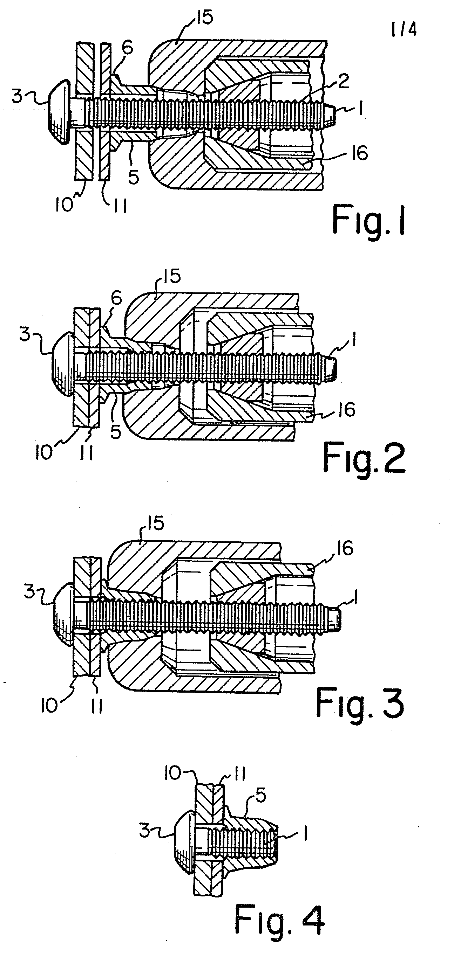

Referring now to Figure 1, a two element fastener according to this invention comprises a pin 1 having a plurality of annular ridges 2 with grooves therebetween or helical threads and a head 3. The second element of the fastener comprises
a swaging collar 5. The collar may have a radial flange 6.
Workpieces 10, 11 are captured between the head 3 and the
flange 6 when the pin has been inserted through openings
in the workpieces and the collar.

A pulling tool comprises an anvil 15 and jaw 16
with means (not shown) to effect relative movement
therebetween. Except for the configuration of the anvil
15, the details of the pulling tool form no part of this
invention and well known prior art pulling tools may be
used in the practice of this invention after the installation
of a suitable anvil as disclosed herein.

The pulling tool jaw 16 engages the distal end of the
pin and forces the anvil 15 toward the head of the pin. The
initial action is to push the collar 5 towards the head carrying
the workpieces 10 and 11 into engagement with each other.
If the workpieces are sprung apart, the initial action
continues to pull the workpieces together until the force
resisting clamp-up is equal to the force required to initiate
swaging.

Figure 2 illustrates the arrangement of a two-part
fastener and the pulling tool during swaging, and Figure 3
shows the arrangement just prior to break-off. Figure 4
illustrates the fastener after break-off.

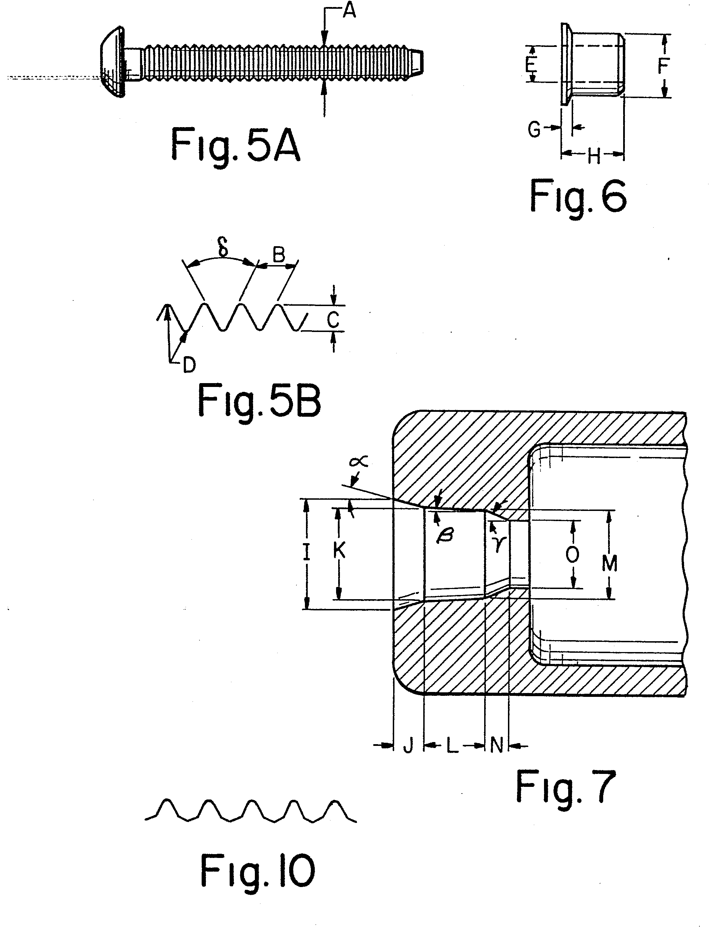

This invention relates to a specific configuration
of the pin, collar, and swaging anvil. The pin shown
in Figure 5A has a head and a plurality of annular ridges
or threads with grooves therebetween. In the case of a typical
3/16 inch (4.76mm) pin, the maximum ridge or thread diameter
(hereinafter referred to as the "overall diameter A")
is 3/16 inch (4.76mm). The pitch B (distance between
ridges - see Figure 5B) should be less than 1/5 of the
overall diameter A . With the embodiment illustrated in Figure 5A, in the case of either annular ridges or threads, the pitch B is about 1/32 inch (0.79 mm), i.e. 1/6 of the overall diameter A. The depth C of the ridges is about 0.0191 inch (0.49 mm). Thus, in the case of threads, a suitable pin would be a 10-32 machine screw (i.e. a screw having a size 10 shank, which is 4.88 mm. in diameter, and having 32 threads per inch or per 2.54 cms). However, if the thread pitch is too small, the wear life of the jaws used to instal the parts will be impractically low. Prior art lockbolt pins that tend to have a deeper groove and correspondingly greater pitch, for example 0.042 inch (1.07mm) for 3/16 inch (4.76 mm) outer diameter, do not permit the maximum strength to be developed in any one fastener diameter.

A pin of the general shape shown in Figures 5A and 5B has symmetrical annular locking grooves with peak and root included angles $\delta$ of 60 degrees and the radii D of these convex and concave angles is equal to 1/60 of thereabouts of the overall diameter A of the pin. The preferred dimensions of the pin vary with the overall diameter. Preferred dimensions for 3/16 inch (4.76mm) and 1/4 inch (6.35mm) pins are given in Table I.

The pin is preferably fabricated from a hardenable steel, for example, SAE 1038 steel having heat treated hardness of 36 to 40 Rockwell C (approximately 340-390 Hv/10 Vickers).

The collar shown in Figure 6 is fabricated from a low carbon steel that is soft relative to the pin, for instance 45 to 60 Rockwell B (approximately 92-110 Hv/10 Vickers) after heat treatment. The inner diameter E of the collar is sufficiently large to clear the threads on the pin. The outer diameter F of the collar is commonly similar to the length H of the collar. The width G of the flange has been adjusted as will be explained below. The preferred dimensions of the collar may vary with the size of the pin and are given in Table 1 for 3/16 inch (4.76mm) and 1/4 inch (6.35mm) pins. The radial flange of the collar is optional.

TABLE I

| Nominal Diameter | A (max) inches (mm) | B inches (mm) | C inches (mm) | D inches (mm) | E inches (mm) | F inches (mm) | G inches (mm) | H inches (mm) |
|---|---|---|---|---|---|---|---|---|
| 3/16 inch (4.76 mm) | .1875 (4.76) (max) | .03125 (0.79) | .0191 (0.49) | .0033 (0.08) | .189 (4.80) | .315 (8.00) | .030 (0.76) | .270 (6.86) |
| 1/4 inch (6.4mm) | .250 (6.4) | .0417 (1.06) | .0255 (0.65) | .0045 (0.11) | .252 (6.40) | .409 (10.39) | .040 (1.02) | .390 (9.91) |

The dies used to thread roll these pins were standard 10-32 machine screw dies modified to roll annular grooves in place of helical grooves where annular grooves were required.

The anvil shown in Figure 7 has a skirt portion to the right side as shown in the drawing that supports the die portion shown to the left. Generally, the entire anvil is symmetrical with respect to an axis of rotation or centre line and at least the inner surfaces of the die portion are symmetrical with respect to the axis of rotation.

The inner surface of the die portion of the swaging anvil is comprised of three abutting sections, each comprising a frusto-conical surface, and an optional cylindrical section. The three abutting sections define an aperture which becomes progressively narrower at points further from the end which first engages the collar, and the joints between the sections have coincident surfaces. A frusto-conical swaging surface is shown on the left of Figure 7 and has an entry diameter I and an exit diameter K. The length of the swaging surface is J and the lead-in angle α of the swaging surface is between 10 and 20 degrees and preferably between 12 and 18 degrees and, in the most preferred embodiment, 15 degrees. The function of the swaging surface is to cause the collar to flow into engagement with the grooves of the pin. The preferred dimensions of the anvil vary with the size of the pin and collar and are given in Table II for a preferred anvil for swaging a 3/16 inch (4.76mm) pin and corresponding collar as described in Table I.

TABLE II

| I | J | K | L | M | N | O |
|---|---|---|---|---|---|---|
| .312 (7.92) | .070 (1.78) | .272 (6.91) | .125 (3.18) | .259 (6.58) | .082 (2.08) | .200 (5.08) |

Inward of the swaging surface is a frusto-conical retaining surface having a lead-in angle β between 2 and 5 degrees and preferably about 3 degrees. The function of this surface is to maintain engagement of the already swaged portion of the collar in the threads of the pin while the remaining portion of the collar is being swaged. The axial length L of the retaining surface and the exit diameter M preferably have the values given in Table II.

The last operative surface in the anvil is a frusto-conical restricting surface which has an abrupt lead-in angle γ between 17 and 23 degrees and preferably about 20 degrees. The exit diameter O of the restricting surface is sufficient to allow clearance for the pin. The axial length N of the restricting surface preferably has the value given in Table II. This surface of the anvil restricts further movement of the collar into the anvil and causes transverse forces due to swaging that concentrate at a pin groove positioned within the axial length of the restricting surface. The pin naturally breaks at this groove due to the combined effects of the transverse and tensile forces. It should be noted that no portion of the collar is extruded past the restricting surface. At the time of breaking, the collar is naturally repelled from the anvil due to the compression forces upon the restricting surface and the draft of the retaining section. Hence no special kick-out hammer is needed to release the anvil from the collar after break-off.

- 11 -

As can be seen from the foregoing description, the axial length of the collar and the axial length of the swaging and retaining surface of the anvil have a critical relationship. More precisely, when the collar has a flange, the axial length H of the collar minus the axial length G of the flange must be such that after elongation due to extrusion in the anvil the collar terminates within the restricting surface. If shorter, the concentration of the transverse forces at a groove for causing break-off does not take place. If longer, an excessive number of threads at the end of the pin adjacent the workpiece will not have metal swaged thereinto.

A number of improved properties of lockbolt joints result from the use of a smaller pitch for the pin threads or grooves and a severe angle of the restricting surface on the anvil. The severe angle on the restricting surface sufficiently concentrates the transverse forces to enable breaking at an acceptable tensile force not withstanding the greater groove diameter of the pin. The greater tensile force permitted by the greater groove diameter in turn results in a more effective flow of collar material into the grooves.

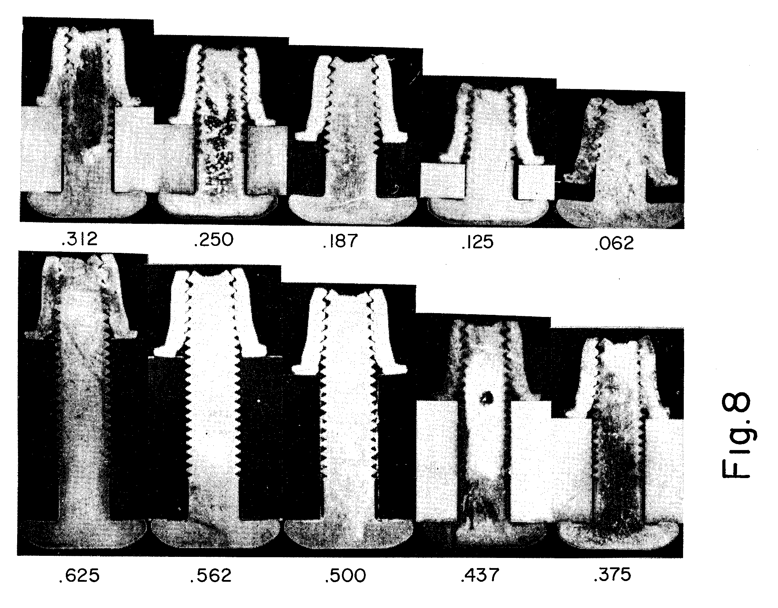

Figure 8 is a photograph of a series of ten sections through lockbolt fasteners having a 3/16 inch (4.76mm) pin configured and set with an anvil as described above. The pin was made of a steel having a hardness between 36 and 40 Rockwell C and the collar was made of a steel having a hardness between 45 and 60 Rockewell B. The thickness of the workpiece varies from 0.062 up to 0.625 inches (1.57 to 15.88mm). The flow of collar material into the grooves should be noted, and it will be seen that the collar bears upon six or seven threads of the pin in each instance. The flush break-off of the pin at the end of the collar should also be noted.

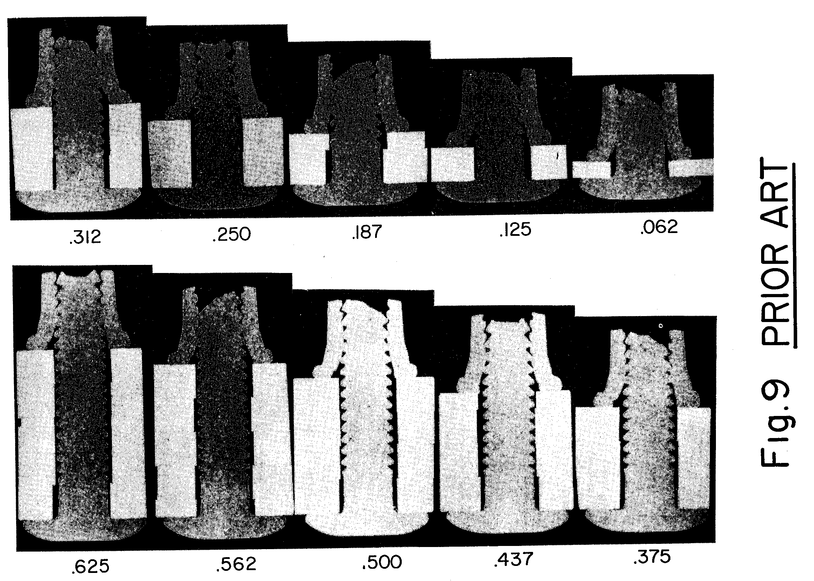

Figure 9 is a photograph of a similar series of lockbolt fasteners having a 3/16 inch (4.76mm) pin but made and set according to the advanced prior art. The pins differ from those described above in having a threaded pitch of 0.042 inch (1.07mm) and correspondingly deeper grooves. In each case, the collar was substantially identical. The flange used was, however, slightly thicker than that used in Figure 8. The material of the collars was hardened to 45 to 60 Rockwell B. The pin was fabricated of a slightly softer steel with a hardness of 30 to 33 Rockwell C. The fastener and setting toll used in Figure 9 are substantially as shown and described in U.S. Patent Specification No. 4,208,943. Referring to Figure 9, the poor engagement of the collar with the threads should be noted. The ragged break-off of the pin with the break extending deep into the collar in many instances should also be noted.

A visual comparison alone of the lockbolt fasteners shown in Figures 8 and 9 indicates the superiority of the system described in relation to Figures 1 to 7. Numerical test data also supports this observation. Table III shows comparative numerical test data on four variations (Numbers 2, 3, 4 and 5) of a lockbolt of the type described in relation to Figures 1 to 7, and comparative data for the advanced prior art lockbolt illustrated in Figure 9 (Number 1).

TABLE III

| Lockbolt No. | Product | Residual Tension Pounds (KN) | Tensile Strength Pounds (KN) | Single Shear Strength (Pounds) (KN) | Clamp Force Pounds | Fatigue* Strength with Pre-Load Cycles | Break Load Pounds (KN) | Hardness |
|---|---|---|---|---|---|---|---|---|
| 1 | Prior Art 3/16 inch (4.76mm) diameter | 979 (4.35) | 1522 (6.77) | 1564 (6.96) | 1400 (6.23) | 47,663 | 2708 (12.05 | Pin:30-33 Rockwell C Collar: 54-57 Rockwell B (as is) |
| 2. | 60° thread SAE 1038 steel (Plated) | 1993 ( .8.86) | 2376 (10.57) | 1991 (8.86) | 1600 (7.12) | 3,000,000 (N.F.) | 3494 (15.54) | Pin: 38-40 Rockwell C Collar: 54-57 Rockwell B (Modified) |
| 3. | 50° thread** SAE 1038 steel (Plated) | 2040 (9.07) | 2386 (10.61) | 2148 (9.55) | 1630 (7.25) | 3,000,000 (N.F.) | 3672 (16.33) | Pin: 38-40 Rockwell C Collar: 54-57 Rockwell B (Modified) |

Table continued over

- 13 -

0122685

| | | | | | | | |
|---|---|---|---|---|---|---|---|
| 4 | 60° thread<br>SAE 1038<br>steel<br>(Unplated) | 2069<br>(9.20) | 2600<br>(11.56) | 1948<br>(8.66) | 1630<br>(7.25) | 3,000,000<br>(N.F.) | 3492<br>(15.53) | Same as above |
| 5 | 50° thread**<br>SAE 1038<br>steel<br>(Unplated) | 2195<br>(9.76) | 2612<br>(11.62) | 2128<br>(9.47) | 1670<br>(7.43) | 3,000,000<br>(N.F.) | 3696<br>(16.44) | Same as above |

N.F. means no failure.

The test values shown represent the average of five readings in each case

* Fatigue set up loads are 1000lbs/100lbs (4.4 KN/0.44 KN) at 1500 cycles/minute

** Truncated root parts.

0122685

The data in Table III indicates that lockbolts of the type described in relation to Figures 1 to 7 have superior tensile strength, shear strength and preload fatigue strength than prior art lockbolts. It should be noted that the higher residual tension of the lockbolts results in an improved preloaded fatigue strength.

The clamp force is somewhat greater for the lockbolts and anvil system of the type described in relation to Figures 1 to 7 this being indicative of a greater ability to draw workpieces together during the swaging process. The breakloads are higher than for the prior art but not detrimentally so. Available pulling tools may be used to set the lockbolts of the type described in relation to Figures 1 to 7. In fact, the high breakload enables more effective swaging of the collar between the grooves which in turn improves residual tension.

The parameters of the lockbolt and anvil that produce the superior results described above may be restated as follows: the 1/6 diameter A thread pitch is finer than prior art designs and this results in more peaks in engagement with the inside wall of the collar giving a higher tensile strength. Also, flushness of fracture is improved because the most favourable position of the outer end of the locking collar relative to the nearest groove occurs more frequently throughout a given grip range than would be the case with a coarser pitch.

The 60 degree peak angle and small (1/60 A) radius D on the pin gives improved penetration of the inside wall of the collar which in turn gives improved tensile strength.

The 15 degree lead-in angle α inside the swaging anvil provides a lead-in for the collar and ensures that the outer edge of the collar is not damaged.

0122685

- 16 -

The 3 degree lead in angle β inside the swaging anvil serves to help maintain the collar material in intimate contact with the grooves of the pin even if the pin tends to reduce in diameter due to stretching during swaging.

The 20 degree lead-in angle γ inside the swaging anvil has several functions: (a) it forces material radially inwards just prior to pin fracture as shown in Figure 3 and, by a wedging action between groove faces, serves to force these faces apart thus facilitating a pin break in the desired position just within the outer end of the collar; (b) it forces material inwards and further helps (in addition to the 3 degree angle mentioned above) to maintain contact between the inside wall of the collar and the grooves of the pin even when the pin stretches locally in the vicinity of the collar end (thereby becoming smaller in diameter) just prior to breaking; (c) when for ease of manufacturing, or other reasons, it is desirable to eliminate the flange on the inner end of the collar (next to the workpiece), the abrupt lead-in angle will by itself ensure that collars swage uniformly and that no damage occurs to the workpiece due to the swaging anvil contacting the workpiece; and (d) after the pin has broken, the material of the collar radially inward of the abrupt lead-in angle springs radially outward and exerts a force radially outward on the restricting surface of the anvil. This force also has a component which acts axially upon the anvil and serves to disengage it from the swaged collar.

As mentioned above, the pin may be rolled with 10-32 machine screw threads. The advantage of this arrangement is that regardless of the thickness of the workpieces (within practical limits) there is always a groove or portion of a groove in the optimum position (relative to the outer end of the collar) to receive material swaged inward by the restricting surface of the anvil which contributes to flushness of fracture.

- 17 -

With this arrangement, the collar becomes locked onto the pin due to the stretching of the outer portion of the machine screw thread which takes place during installation. Subsequently, the collar cannot work loose because unequal thread pitches have been formed.

In a preferred embodiment, the thread root diameter may be truncated beyond the rounding described above as shown in Figure 10 so that the roots are more rounded than the peaks. For example, the root diameter can be 0.160 inch (4.06mm) for a 3/16 inch (4.16mm) pin as compared with the 0.149 inch (3.78mm) root diameter (A-2C) for the same pin described above. This design provides a larger cross-sectional area of the root of the groove which increases the shear strength of the pin and also its tensile strength. Truncating of the root is possible without loss of tensile strength (where tensile failure takes the form of the threads stripping) because collar material never completely fills the 60 degree grooves in the previously described embodiment. In fact, an increase in tensile strength usually results because the break strength of the pin is increased and the collar material is more tightly swaged into the grooves of the pin.

The peak angle of the threads or ridges for the most preferred embodiment is 60 degrees. Other peak angles are acceptable and data for pins with a peak angle of 50 degrees is given in Table III. The 50 degree peak angle further improves the penetration of the peaks into the inside surface of the collar and if the strength of the pin material is sufficiently high, the tensile strength of the fasteners are increased over pins with the 60 degree peak angle.

A 40 degree peak angle further improves penetration

- 18 -

of the peaks into the collars and if a peak material is chosen which has a high enough rate of cold work, an angle around 40 degrees will result in a permanent bending of the peaks during installation in the direction of the pulling tool. This bending much increases the residual tension of the fastener because the collar material has no slope to slide up during relaxation. As may be imagined, a tensile load on such an installed fastener will cause the collar to engage more fully with the grooves of the pin prior to failure and failure will be delayed until a higher load is applied. A limitation to this concept is that unless the material of the pin is such as to cold work rapidly (that is with only small amounts of plastic flow) the peaks will bend back again when a tensile load is applied to the installed fastener after break-off. A further drawback to the narrow peaks is that the appearance of the break-off fracture can be less desirable since the fractures tend to be diagonal instead of straight across the periphery of a single groove.

This invention can also be applied to aluminium fasteners. A fastener similar in configuration to Numbers 2 and 4 in Table III was made of aluminium. The pin was of aluminium alloy 7075T6 (B.S. 7075TF) with a hardness of 73 to 78 Rockwell B, and the collar of an aluminium alloy 6061 T6 (B.S. 6061TF) with a hardness less than 10 Rockwell B. The tensile strength for this fastener was 1050 pounds (4.67 KN); the single shear strength 882 pounds (3.92 KN); and the clamp force was 620 pounds (2.76 KN). No failure occurred after 3 million cycles in a fatigue test using set up loads of 550 and 55 pounds (2.45 and 0.245 KN).

It will be appreciated that the lockbolt described above

0122685

- 19 -

has greater tensile and shear strengths, greater residual
tension and preloaded fatigue strengths, and greater clamp
force, without an unacceptable increase in breakload,
than known lockbolts.  Very significantly, lockbolts set
according to the above description break-off flush with the
free end of the collar.  Also, the breaking mechanism
is such that the collar is inherently kicked back out of
the anvil and the pulling tool need not be complicated by
the provision of a kick-out hammer.

C L A I M S

1.     A system for fastening workpieces together comprising: a pin (1) with a head (3) and a shank having a plurality of grooves (2) therein; a tubular collar (5); and a tool for swaging the collar (5) into the grooves (2) of the pin (1) having an anvil (15) which comprises three  axial sections, characterised in that the three axial sections comprise: a swaging section defined by a frusto-conical surface forming an angle between 10 and 20 degrees with the axis of the anvil (15), a retaining section defined by a frusto-conical surface forming an angle between 2 and 5 degrees with the axis of the anvil (15) and a restricting section defined by a frusto-conical surface forming an angle between 17 degrees and 23 degrees with the axis of the anvil (15), the axial length of the swaging, retaining and restricting sections of the anvil (15) together being such that the distal end of the collar (5) terminates within the restricting section when swaging has been completed.

2.     A system as claimed in claim 1 in which the grooves (2) of the pin (1) are annular grooves.

3.     A system as claimed in claim 1 in which the grooves (2) of the pin (1) comprise helical threads whereby the stretching produced during the swaging operation results in a non-uniform thread pitch in the groove area which locks the collar (5) against turning and loosening.

4.     A system as claimed in any preceding claim in which the grooves (2) of the pin (1) have an included angle at peak and root between 40 and 60 degrees.

5.    A system as claimed in any preceding claim in which the grooves (2) of the pin (1) have a thread pitch of substantially 1/6 of the nominal diameter (A) of the pin (1).

6.    A system as claimed in any preceding claim in which the peaks and roots of the grooves (2) of the pin (1) are rounded and have radii of curvature of substantially 1/60th of the nominal diameter (A) of the pin (1).

7.    A system as claimed in any preceding claim in which the roots of the grooves (2) are truncated and so have a larger effective diameter of curvature than the peaks thereof.

8.    A method for setting a lockbolt to join workpieces comprising a pin (1) having a head (3) and a shank with a plurality of grooves (2) therein and a tubular collar (5) comprising the steps of: positioning the collar (5) on the pin (1) with the workpieces between the collar (5) and the head (3) of the pin (1); and forcing a swaging anvil (15) over the collar (5) to swage the collar (5) into grooves (2) of the pin (1), characterised by the steps of: selecting a pin (1) having grooves (2) of a pitch less than 1/5 of the diameter (A) of the pin (1); selecting a swaging anvil (15) having at least three sections each of which is defined by a truncated conical inner surface; forcing the anvil (15) over the collar (5) so that a first section of the anvil (15) swages the collar (5) into grooves (2) of the pin (1); forcing a second section of the anvil (15) over the portion of the collar (5) already swaged to retain contact between the collar (5) and the grooves (2) of the pin (1); and forcing a third section of the anvil (15) into the distal end of the collar (5) when swaging of the remainder is complete to prevent extrusi-n of the collar (5) through the back end of the anvil (15) and to break off the distal end of the pin (1).

0122685

/4

Fig.1

Fig.2

Fig.3

Fig. 4

Fig. 5A

Fig. 6

Fig. 5B

Fig. 7

Fig. 10

3/4

Fig.8

4/4

Fig.9  PRIOR ART

## EUROPEAN SEARCH REPORT

European Patent
Office

EP   84 30 0319

### DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| D,A | US-A-2 978 946  (R. LOOKER)<br>* Column 7, lines 35-59; figures 13-16 * | 1,2 | F 16 B  19/05 |
| A | FR-A-1 320 565  (HUCK MANUFACTURING COMPANY)<br>* Page 3, right-hand column, lines 25-55; figures 3-5 * | 1,2 | |
| D,A | US-A-4 208 943  (SMITH) | | |

TECHNICAL FIELDS
SEARCHED (Int. Cl. ³)

F 16 B
B 21 J

The present search report has been drawn up for all claims

| Place of search<br>THE HAGUE | Date of completion of the search<br>05-07-1984 | Examiner<br>VAN WESTENBRUGGE A. |
|---|---|---|

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document